# EUROPÄISCHE PATENTANMELDUNG

(11) **EP 3 323 285 A1**
(43) Veröffentlichungstag der Anmeldung: **23.05.2018**
(21) Anmeldenummer: 17200501.9
(22) Anmeldetag: 08.11.2017
(51) Int. Cl.: A01J 27/04

(54) **VORRICHTUNG UND VERFAHREN ZUM BEARBEITEN EINER OBERFLÄCHE VON LEBENSMITTELPRODUKTEN**

(30) Priorität: 22.11.2016 DE 102016122473
(71) Anmelder: EMEC-Prototyping GmbH, 01187 Dresden (DE)
(72) Erfinder: Beckert, René, 01159 Dresden (DE)
(74) Vertreter: Witte, Weller & Partner Patentanwälte mbB

(57) **Zusammenfassung**

Es werden eine Vorrichtung und ein Verfahren zum Bearbeiten einer Oberfläche von Lebensmittelprodukten (22), insbesondere zum Entplastifizieren und/oder Entrinden von Käseprodukten angegeben, mit einer Bearbeitungsstation, an der mindestens ein rotierend antreibbares Bearbeitungswerkzeug (20) zur mechanischen Bearbeitung der Oberfläche vorgesehen ist, wobei jedes Bearbeitungswerkzeug (20) ein Rotationselement (30) aufweist, an dem eine Mehrzahl von zumindest teilweise flexibel ausgebildeten Bearbeitungselementen (32) zur mechanischen Bearbeitung der Oberfläche aufgenommen ist.

## Beschreibung

Die vorliegende Erfindung betrifft eine Vorrichtung zum Bearbeiten einer Oberfläche von Lebensmittelprodukten, insbesondere zum Entplastifizieren und/oder Entrinden von Käseprodukten, wie Käseblöcken oder Käselaiben, mit einer Bearbeitungsstation, an der mindestens ein rotierend antreibbares Bearbeitungswerkzeug vorgesehen ist.

Die vorliegende Erfindung betrifft ferner ein Verfahren zum Bearbeiten einer Oberfläche von Lebensmittelprodukten, insbesondere zum Entplastifizieren und/oder Entrinden von Käseprodukten, mit den Schritten:
- Bereitstellen eines Lebensmittelproduktes mit einer zu bearbeitenden Oberfläche;
- Bereitstellen eines Bearbeitungswerkzeugs und
- Rotieren des Bearbeitungswerkzeugs und Bearbeiten der Oberfläche mittels des Bearbeitungswerkzeugs.

Derartige Vorrichtungen und Verfahren dienen dazu, eine Oberfläche (z.B. Rinde, Patina) von Lebensmittelprodukten zu entfernen, insbesondere eine Plastikbeschichtung von ganzen Käseblöcken oder Käselaiben zu entfernen, was als Entplastifizieren bezeichnet wird. Nach dem Entplastifizieren kann sich eine Entfernung der Rinde (Entrindung) anschließen. Bei einer Entplastifizierung und einer Entrindung ist es erwünscht, das anfallende Plastikmaterial und die abgetragene Rinde voneinander zu trennen, da die Rinde wiederverwertet werden kann, sofern sie nicht mit dem Plastikabfall verunreinigt ist.

Eine Vorrichtung und ein Verfahren gemäß der eingangs genannten Art sind aus der EP 1 932 431 A2 bekannt. Hierbei wird der Käseblock mittels Infrarotstrahlung erhitzt, um eine Abtragung der Plastikbeschichtung zu erleichtern. Nach ausreichender Aufheizung wird die Plastikbeschichtung mittels eines Messers geschnitten und abgezogen. Zur Unterstützung wird ein Werkzeug mit zwei rotierenden Rollen in der Art von Fräsern genutzt.

Die Erhitzung des Käseblocks mittels Infrarotstrahlung ist energieintensiv und kann sich nachteilig auf die Qualität des Käses auswirken. Auch ist der Vorgang zum Abziehen der Plastikbeschichtung sehr zeitaufwendig und kompliziert. Eine Entrindung ist bei diesem Verfahren nicht vorgesehen.

Im Stand der Technik erfolgt die Entplastifizierung überwiegend durch Abwaschen der wasserlöslichen Plastikbeschichtung (Plast-Coat). Anschließend wird eine Entrindung durch Abhobeln oder mittels eines Fräsers durchgeführt (vgl. z.B. DE 41 38 739 A1).

Hierbei geht das Plast-Coat vollständig verloren. Beim anschließenden Hobeln oder Fräsen wird meist erheblich mehr Material abgetragen als notwendig.

Durch Benutzung (Firma Groba, Niederlande, 6031 RT Nederweert, "Omega Robo Derinder") ist eine Vorrichtung zum Entrinden mit einem Fräsroboter bekannt geworden, bei dem ein Fräswerkzeug an der Oberfläche eines Käseproduktes entlang geführt wird. Zuvor vermisst ein Kamerasystem die Käseoberfläche, um eine optimale Bahn für die Führung des Fräswerkzeuges zu berechnen.

Nachteilig bei den bekannten Fräs- oder Hobelvorrichtungen zum Entfernen der Käserinde von Käseprodukten ist es, dass der Rindenabtrag relativ hoch ist und somit ein Verlust an Lebensmittelbestandteilen unnötig erhöht ist.

Wegen des Abtrags mit starren Fräs- oder Hobelwerkzeugen besteht ferner das Problem, dass der Oberflächenabtrag nicht sauber zwischen dem Plast-Coat und der Rinde getrennt werden kann, so dass die unterschiedlichen Abtragsmaterialien miteinander vermischt werden und somit eine Wiederverwertung erschwert ist. Auch ergeben sich beim Wenden der Käseprodukte Kontaminationen, was den modernen Anforderungen eines hygienischen Designs der Käseentrindung nicht entspricht.

Aus der DE 10 2013 205 728 A1 ist eine Entrindevorrichtung bekannt, wobei zur Entrindung eine Fräswalze vorgesehen ist, an der mehrere Klingen verstellbar gehalten sind, wobei die Klingen an Klingenträgern aufgenommen sind, die mittels Federn vorgespannt sind. Beim Antrieb der Fräswalze bewegen sich die Klingenträger entgegen der Vorspannung der Federn auf Grund der Zentrifugalkraft nach außen.

Auch hierbei erfolgt eine Abschälung durch Fräsmesser, so dass der Abtrag schwer kontrollierbar ist.

Es ist daher die Aufgabe der vorliegenden Erfindung, eine Vorrichtung und ein Verfahren zum Bearbeiten von Oberflächen von Lebensmitteln, insbesondere zur Entplastifizierung und/oder Entrindung von Käseprodukten bereitzustellen, womit der Oberflächenabtrag auf den Abtrag der Plastikbeschichtung oder auf den Abtrag der Rinde beschränkt werden kann und eine Trennung zwischen den anfallenden Materialien möglich ist. Ferner soll eine Kontamination so gering wie möglich gehalten werden.

Diese Aufgabe wird bei einer Vorrichtung gemäß der eingangs genannten Art erfindungsgemäß dadurch gelöst, dass jedes Bearbeitungswerkzeug ein Rotationselement aufweist, an dem eine Mehrzahl von zumindest teilweise flexibel und flächig ausgebildeten Bearbeitungselementen zur mechanischen Bearbeitung der Oberfläche aufgenommen ist, wobei an den Bearbeitungselementen jeweils mindestens ein Abrasivelement, vorzugsweise eine Mehrzahl von Abrasivelementen, zur mechanischen Bearbeitung der Oberfläche vorgesehen ist. Die flexiblen Bearbeitungselemente sind flächig ausgebildet und bestehen vorzugsweise aus Blech.

Hinsichtlich des Verfahrens wird die Aufgabe der Erfindung ferner durch ein Verfahren zum Bearbeiten einer Oberfläche von Lebensmittelprodukten mit den folgenden Schritten gelöst:
- Bereitstellen eines Lebensmittelproduktes, mit einer zu bearbeitenden Oberfläche;
- Bereitstellen eines Bearbeitungswerkzeugs mit einem Rotationselement, an dem eine Mehrzahl von zumindest teilweise flexiblen Bearbeitungselementen aufgenommen ist, wobei an jedem Bearbeitungselement mindestens ein Abrasivelement vorgesehen ist, und
- Rotieren des Bearbeitungswerkzeugs und Bearbeiten der Oberfläche mittels der Abrasivelemente.

Die Aufgabe der Erfindung wird auf diese Weise vollkommen gelöst.

Dadurch, dass der Abtrag durch ein rotierendes Rotationselement mit zumindest teilweise flexibel ausgebildeten Bearbeitungselementen mittels daran vorgesehener Abrasivelemente erfolgt, lässt sich der Oberflächenabtrag relativ genau dosieren und auf den notwendigen Bereich beschränken. So ist es möglich, ein Käseprodukt in einem ersten Arbeitsgang zu entplastifizieren und in einem zweiten Arbeitsgang zu entrinden. Dabei können die anfallenden Produkte sauber voneinander getrennt werden und der Abtrag auf den notwendigen Bereich beschränkt werden.

Vorzugsweise wird hierbei ein Bearbeitungsraum, in dem die Bearbeitung stattfindet, abgesaugt, etwa mittels eines Zyklons.

Auf diese Weise wird eine Kontaminierung gering gehalten.

Durch die flächige Ausgestaltung können sich die Bearbeitungselemente flexibel an die Oberfläche des Lebensmittelproduktes anlegen. Mittels des mindestens einen Abrasivelementes oder bevorzugt einer Mehrzahl von Abrasivelementen erfolgt der Abtrag im Wesentlichen durch Reiben und kann so relativ genau dosiert werden. Die flexiblen Bearbeitungselemente können sich individuell in Abhängigkeit von der Härte der zu bearbeitenden Oberfläche verbiegen und entsprechend einen mechanischen Abtrag mittels des mindestens einen Abrasivelementes von der zu bearbeitenden Oberfläche gewährleisten.

Gemäß einer weiteren Ausgestaltung der Erfindung weisen die Bearbeitungselemente jeweils einen flexiblen Befestigungsabschnitt auf.

Hierdurch können sich die Bearbeitungselemente in Abhängigkeit von der Antriebsdrehzahl an die Oberfläche der Lebensmittelprodukte anlegen und somit an die Oberfläche anpassen.

Gemäß einer weiteren Ausgestaltung der Erfindung ist das mindestens eine Abrasivelement einstückig mit dem Bearbeitungselement ausgebildet, vorzugsweise in Form einer Ausprägung ausgebildet.

Auf diese Weise werden eine hohe Standzeit der Bearbeitungselemente und eine einfache Herstellung gewährleistet.

Vorzugsweise weisen die Bearbeitungselemente jeweils eine Mehrzahl von Abrasivelementen auf.

Auf diese Weise ist ein intensiver Abtrag von der Oberfläche ermöglicht.

Gemäß einer weiteren Ausgestaltung der Erfindung weisen die Bearbeitungselemente jeweils einen sich an den Befestigungsabschnitt anschließenden Wirkabschnitt auf, der durch in Rotationsrichtung verlaufende Schlitze in mehrere Abschnitte unterteilt ist.

Auf diese Weise ist eine flexible Anlage an der zur bearbeitenden Oberfläche erleichtert. Es ergibt sich eine kammartige Struktur, welche eine Anpassung an die Oberfläche verbessert.

Die Bearbeitungselemente bevorzugt aus Metall, vorzugsweise aus Stahl, insbesondere aus Federstahl, vorzugsweise jeweils in Blechform.

Hierdurch ist eine hohe Standzeit der Bearbeitungselemente ermöglicht. Da die Bearbeitung in der Regel mit einer hohen Drehzahl, etwa in der Größenordnung von 1000 bis 4000 U/min, erfolgt, ergeben sich erhebliche Anforderungen an die mechanische Festigkeit der Bearbeitungselemente, was insbesondere mit der Verwendung von Federstahl erfüllt werden kann.

Gemäß einer weiteren Ausgestaltung der Erfindung ist das Rotationselement walzenförmig ausgebildet, und die Bearbeitungselemente sind entlang einer Mantelfläche am Rotationselement festgelegt.

Auf diese Weise ergeben sich ein robustes Design und ein einfacher Aufbau.

Weiter bevorzugt sind die Bearbeitungselemente parallel zu einer Rotationsachse des Rotationselements am Rotationselement festgelegt.

Hiermit ist eine einfache Befestigungsmöglichkeit und eine gute Beweglichkeit der Bearbeitungselemente gewährleistet.

Gemäß einem weiteren Merkmal der Erfindung stehen die Bearbeitungselemente über die Mantelfläche des Rotationselementes hinaus nach außen hervor und sind in Rotationsrichtung abgewinkelt.

Auf diese Weise wird ein guter Angriff der Bearbeitungselemente an der zu bearbeitenden Oberfläche unterstützt.

Gemäß einem weiteren Merkmal der Erfindung weisen die Bearbeitungselemente einen flexiblen Stützabschnitt auf, der zur Abstützung auf der Mantelfläche des Rotationselements im Betrieb ausgebildet ist.

Da die Bearbeitungselemente bei den üblichen hohen Drehzahlen, die sich im Bereich von etwa 1000 bis 4000 U/min bewegen, eine gewisse Flatterneigung aufweisen und starken mechanischen Beanspruchungen ausgesetzt sind, wird auf diese Weise eine Abstützung der Bearbeitungselemente im Betrieb, d.h. wenn sie im Eingriff an einer zu bearbeitenden Oberfläche sind, ermöglicht. Dadurch wird einem vorzeitigen Verschleiß entgegengewirkt. Auch kann mit einer grundsätzlich höheren Drehzahl gearbeitet werden.

Gemäß einer weiteren Ausgestaltung der Erfindung sind die Bearbeitungselemente mit ihren Befestigungsabschnitten am Rotationselement auswechselbar gehalten.

Auf diese Weise können Bearbeitungselemente, die verschlissen sind, leicht gewechselt werden.

Gemäß einer weiteren Ausgestaltung der Erfindung weisen die Bearbeitungselemente jeweils ein gekrümmtes Ende an ihrem Befestigungsabschnitt auf, mit dem sie in zugeordneten, vorzugsweise im Wesentlichen zylindrischen, Ausnehmungen des Rotationselementes gehalten sind und sich durch einen Schlitz über eine Mantelfläche des Rotationselementes hinaus nach außen erstrecken.

Dies ermöglicht eine einfache Befestigung der Bearbeitungselemente an den Rotationselementen.

Vorzugsweise sind hierbei die Bearbeitungselemente in die Ausnehmungen seitlich einführbar und mittels Sicherungselementen fixierbar.

Gemäß einer alternativen Ausgestaltung der Erfindung erstrecken sich die Bearbeitungselemente im Wesentlichen senkrecht zur Rotationsachse des Rotationselementes. Auch mit einer derartigen Ausführung, die einem Stirnfräser ähnelt, lassen sich gute Bearbeitungsergebnisse erzielen.

Gemäß einer weiteren Ausgestaltung der Erfindung ist das Rotationselement über einen Führungsarm mit einem Drehantrieb verbunden, wobei der Führungsarm beweglich gelagert ist.

Auf diese Weist ist eine flexible Anpassung der Bearbeitungselemente an eine zu bearbeitende Oberfläche gewährleistet.

In zusätzlicher Weiterbildung dieser Ausführung ist hierbei der Führungsarm an einer Aufnahme schwenkbar gelagert. Vorzugsweise ist hierbei eine Verschwenkung um eine Längsachse und/oder eine Querachse des Führungsarms ermöglicht.

Hierdurch wird eine besonders gute Anpassung der Bearbeitungselemente an eine Oberfläche auch dann ermöglicht, wenn diese uneben ist.

Gemäß einer weiteren Ausgestaltung der Erfindung ist eine Sensoreinheit zur Abtastung einer zu bearbeitenden Oberfläche vorgesehen, die mit einer Steuereinheit gekoppelt ist, um eine Position des Rotationselements in Bezug auf eine zu bearbeitenden Oberfläche zu steuern und zu regeln.

Auf diese Weise kann eine optimale Anpassung der Bearbeitungselemente an eine zu bearbeitende Oberfläche gewährleistet werden. Somit kann der Abtrag bestmöglich auf den notwendigen Abtrag beschränkt werden und eine vollständige Entplastifizierung bzw. Entrindung gewährleistet werden.

Gemäß einer weiteren Ausgestaltung der Erfindung ist die Bearbeitungsstation von einem Gehäuse umschlossen, in dem ein Bearbeitungsbereich gebildet ist, der zur Zuführung von Lebensmittelprodukten zur Bearbeitung ausgebildet ist, wobei innerhalb des Bearbeitungsbereichs zumindest ein Führungsarm mit einem Bearbeitungswerkzeug gehalten ist, wobei eine Aufnahme des Führungsarms und ein Antrieb für den Führungsarm innerhalb des Gehäuses aufgenommen und gegenüber dem Bearbeitungsbereich abgedichtet sind.

Auf diese Wiese wird eine Kontamination der Lebensmittelprodukte verhindert, da der Antrieb für den Führungsarm und die notwendige Abstützung in Form einer Aufnahme mit dem Gehäuse über ein geeignetes Dichtungselement abgedichtet sind. Das Gehäuse selbst ist vollständig nach außen und innen hin abgedichtet, so dass eine Kontamination der Lebensmittelprodukte vermieden wird.

Bei dem erfindungsgemäßen Verfahren wird die Oberfläche vorzugsweise schichtweise abgetragen, so dass eine Entplastifizierung getrennt von einer Entrindung erfolgt.

Dies hat den Vorteil, dass bei der Entplastifizierung anfallendes Material sauber von bei der Entrindung anfallendem Material getrennt und aufgefangen werden kann.

Gemäß einem weiteren Merkmal der Erfindung erfolgt zunächst eine Entplastifizierung an einer Oberfläche und an den Längsseiten eines liegenden Lebensmittelproduktes in Form eines Käseblocks, dann wird das Lebensmittelprodukt um 90° gedreht und um 180° gewendet und anschließend eine Entplastifizierung an der ursprünglichen Unterseite und den Querseiten durchgeführt.

Bevorzugt kann dies in zwei aufeinanderfolgenden Stationen durchgeführt werden. Auf diese Weise ist eine durchgehende Entplastifizierung eines Käseblocks ermöglicht, ohne dass dieser durch die Umlagerung kontaminiert wird.

Gemäß einem weiteren Merkmal der Erfindung erfolgt nach der Entplastifizierung eine Entrindung an einer Oberfläche und an den Längsseiten eines liegenden Lebensmittelproduktes in Form eines Käseblocks, anschließend wird der Käseblock um 90° gedreht und um 180° gewendet und es wird eine Entrindung an der ursprünglichen Unterseite und den Querseiten durchgeführt.

Wiederum erfolgt dies vorzugsweise in zwei aufeinanderfolgenden Stationen. Auf diese Weise kann eine durchgehende Entrindung eines Käseblocks gewährleistet werden, ohne dass dieser durch die Umlagerung kontaminiert wird.

Soweit es sich bei dem Lebensmittelprodukt um einen Käselaib, d.h. um einen grundsätzlich zylindrisches Produkt handelt, so kann zunächst eine Entplastifizierung an einer Oberfläche eines liegenden Lebensmittelproduktes durchgeführt werden, dann der Käselaib um seine Längsachse gedreht und am Rand entplastifiziert werden, schließlich wird der Käselaib um 180° gewendet und an seiner ursprünglichen Unterseite entplastifiziert.

In entsprechender Weise kann nach der Entplastifizierung eine Oberfläche eines Käselaibs entrindet werden, dann der Käselaib um seine Längsachse gedreht und am Rand entrindet werden und schließlich der Käselaib um 180° gewendet und an seiner ursprünglichen Unterseite entrindet werden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine erfindungsgemäße Bearbeitungsstation zur Entplastifizierung oder Entrindung von Käseblöcken in vereinfachter, schematischer Darstellung;
- Fig. 2: eine erfindungsgemäße Bearbeitungsstation zur Entplastifizierung oder Entrindung von Käselaiben in vereinfachter, schematischer Darstellung;
- Fig. 3: eine perspektivische Seitenansicht eines Führungsarms gemäß Fig. 1 oder 2 in vergrößerter Darstellung nach Abnahme der Dichtungsmanschette;
- Fig. 4: eine vergrößerte Darstellung des Bearbeitungswerkzeugs gemäß Fig. 3 in einer teilweise geschnittenen Seitenansicht;
- Fig. 5: eine vergrößerte perspektivische Darstellung eines Bearbeitungselementes;
- Fig. 6: eine Seitenansicht eines Bearbeitungswerkzeugs gemäß Fig. 4, in etwas kleinerem Maßstab;
- Fig. 7: eine Seitenansicht eines Bearbeitungswerkzeugs, das gegenüber der Ausführung gemäß Fig. 4 bzw. 6 leicht abgewandelt ist;
- Fig. 8: eine weitere Ausgestaltung eines Bearbeitungswerkzeugs in einer Ansicht von oben und
- Fig. 9: eine vereinfachte schematische Darstellung einer erfindungsgemäßen Anlage zur Entplastifizierung und Entrindung mit vier hintereinander angeordneten Berabeitungsstationen, die nacheinander durchlaufen werden.

Nachfolgend werden für entsprechende Teile entsprechende Bezugsziffern verwendet, auch wenn diese leicht abgewandelt sind.

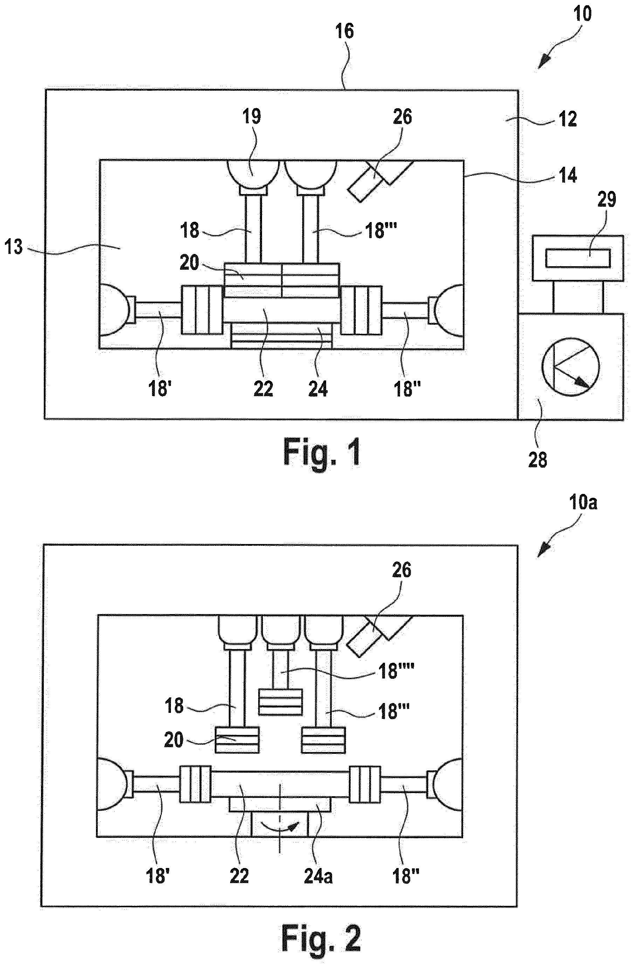

Eine Bearbeitungsstation zur Bearbeitung der Oberfläche von Käseprodukten ist in Fig. 1 insgesamt mit der Ziffer 10 bezeichnet.

Im vorliegenden Fall weist die Bearbeitungsstation 10 ein portalförmiges Gehäuse 12 auf, von dem ein Innenraum umschlossen wird, der einen Bearbeitungsbereich 13 bildet. Das Gehäuse 12 besteht bevorzugt aus Edelstahl und ist allseitig geschlossen, also an seiner Innenseite 14, an seiner Außenseite 16 als auch an den Vorund Rückseiten. Innerhalb des Bearbeitungsbereichs 13 ist eine Antriebsbahn 24, bspw. ein Förderband, zur Förderung von Lebensmittelprodukten 22 in Form von Käseblöcken vorgesehen.

Oberhalb der Antriebsbahn 24 sind nebeneinander zwei Führungsarme 18, 18"' vorgesehen, die über Dichtungen 19 an der Decke der Innenseite 14 befestigt und beweglich aufgenommen sind. An den äußeren Enden der Führungsarme 18, 18' sind rotierend angetriebene Bearbeitungswerkzeuge 20 vorgesehen, die zum Abtrag der Oberfläche durch eine abrasive Bearbeitung ausgebildet sind.

Mit den beiden nebeneinander angeordneten Führungsarmen 18, 18'" und den zugehörigen Bearbeitungswerkzeugen 20 kann somit die Oberseite eines Käseblockes bearbeitet werden. Auf den beiden Seiten sind jeweils ein weiterer Führungsarm 18'" und 18" in entsprechender Weise über Dichtungen an der Innenseite 14 des Gehäuses 12 befestigt. Mittels der an diesen Führungsarmen 18', 18" aufgenommenen Bearbeitungswerkzeuge 20 ist eine seitliche Bearbeitung der Lebensmittelprodukte bzw. Käseblöcke 22 ermöglicht.

An der Decke des Bearbeitungsbereichs 13 ist ferner eine Sensoreinheit 26, etwa in Form einer Kamera, aufgenommen, mit dem die Oberfläche eines Lebensmittelproduktes 22 abgetastet werden kann. Schematisch angedeutet sind ferner eine zentrale Steuerung 28 und eine zugeordnete Anzeige-/Eingabeeinheit 29.

Mittels der von der Sensoreinheit 26 abgetasteten Daten werden die Führungsarme 18, 18', 18", 18"' in geeigneter Weise verschwenkt und der Anpressdruck und die Drehzahl der Bearbeitungswerkzeuge 20 in geeigneter Weise gesteuert, so dass die Oberfläche eines Käseblockes 22 schichtweise abgetragen werden kann, wie im Folgenden noch näher erläutert wird.

Fig. 2 zeigt eine entsprechende Bearbeitungsstation zur Bearbeitung von Lebensmittelprodukten 22 in Form von Käselaiben, die insgesamt mit 10a bezeichnet ist. Die Bearbeitungsstation 10a weist im Unterschied zur Bearbeitungsstation 10 keine Antriebsbahn zum Durchlauf von Lebensmittelprodukten 22 auf, sondern stattdessen einen Drehteller 24a, mit dem darauf aufgenommene Käselaibe 22 um ihre Längsachse gedreht werden können.

Beispielhaft ist an der Oberseite zusätzlich ein weiterer Führungsarm 18"" dargestellt, so dass mit dem drei oben vorgesehenen Führungsarmen 18, 18"', 18"" eine seitlich versetzte Bearbeitung mit den Bearbeitungselementen ermöglicht ist.

Es versteht sich, dass eine derartig versetzte Bearbeitung mit mehreren Führungsarmen auch bei der Bearbeitungsstation 10 gemäß Fig. 1 vorgesehen sein kann.

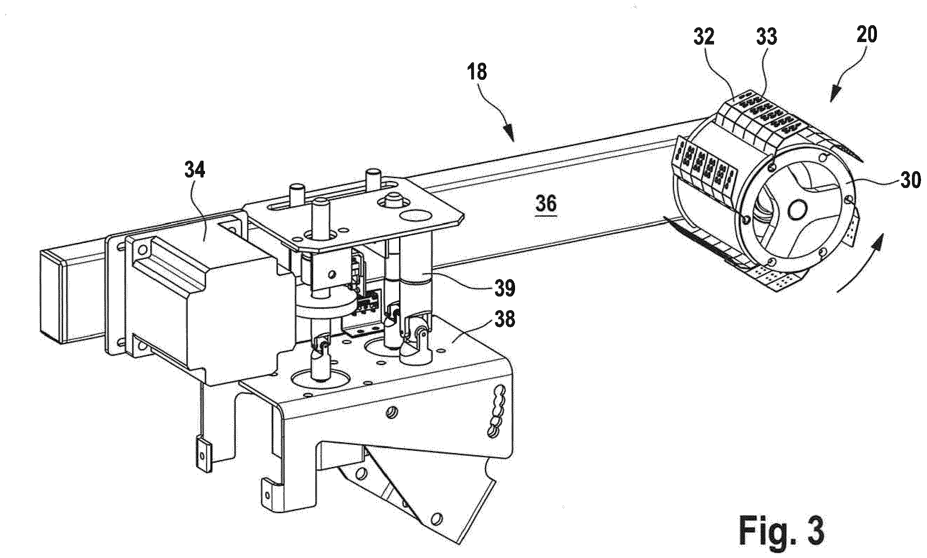

Der nähere Aufbau der Bearbeitungswerkzeuge 20 und des Führungsarmes 18 wird nunmehr anhand der Figuren 3 bis 8 beschrieben.

Fig. 3 zeigt einen Führungsarm 18 mit seinem rotierend antreibbaren Bearbeitungswerkzeug 20 am äußeren Ende. Der Führungsarm 18 weist an seinem gegenüberliegenden Ende einen Drehantrieb 34 auf, der über einen Riementrieb (lediglich mit Ziffer 36 angedeutet) mit dem Bearbeitungswerkzeug 20 gekoppelt ist. Das Bearbeitungswerkzeug 20 weist ein Rotationselement 30 auf, das drehbar gelagert ist und unmittelbar vom Riementrieb 36 angetrieben wird.

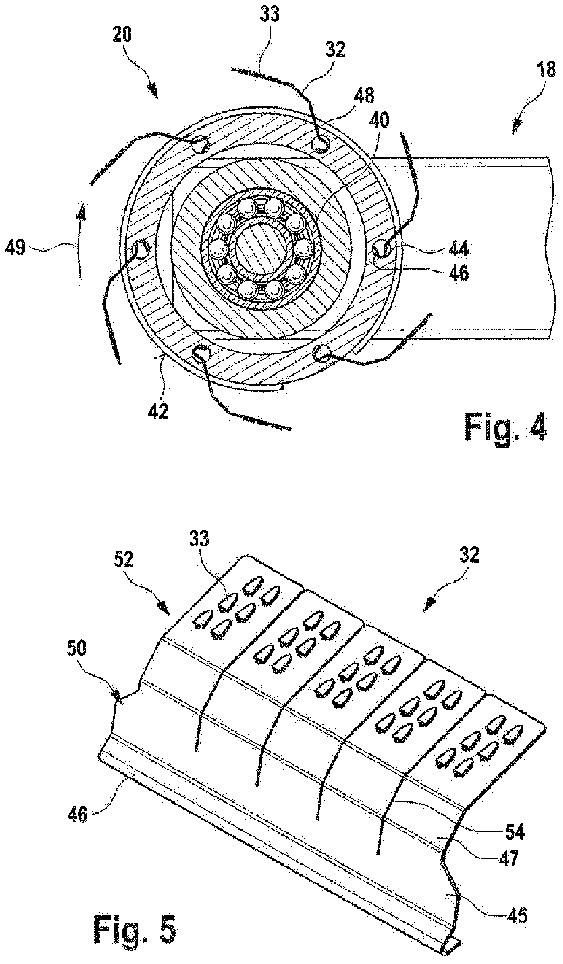

An der Außenoberfläche des Rotationselements 30 sind insgesamt sechs Bearbeitungselemente 32 aufgenommen, an denen jeweils eine Mehrzahl von Abrasivelementen 33 vorgesehen ist. Die Bearbeitungselemente 32 sind flächig ausgebildet und bestehen aus Federstahl. Die Abrasivelemente 33 sind in Form von Ausprägungen oder Sicken ausgebildet (vgl. Fig. 5). Ähnlich wie bei einer Küchenreibe weisen sie in Bewegungsrichtung offene Enden auf.

Der Führungsarm 18 ist ferner mit einer Aufnahme 38 versehen, mit Hilfe derer eine Befestigung und Abstützung an einer zugeordneten Oberfläche am Gehäuse 12 der Bearbeitungsstation 10 bzw. 10a ermöglicht ist. Die Aufnahme 38 weist eine Mehrzahl von Stellelementen 39 auf, mit Hilfe derer eine Verschwenkung des Führungsarms 18 um seine Querachse als auch um seine Längsachse ermöglicht ist. Damit ist eine gezielte Anpassung an eine Oberfläche eines zu bearbeitenden Lebensmittelproduktes 22 ermöglicht. Die Aufnahme 38 und der Drehantrieb 34 sind von einer gemeinsamen Dichtung 19 in Form einer Dichtungsmanschette umschlossen und mit dem Gehäuse 12 abgedichtet (vgl. Fig. 1 bzw. 2).

Jedes Bearbeitungselement 32 weist gemäß Fig. 5 einen Befestigungsabschnitt 50 mit einem gekrümmten Ende 46, sowie ein sich an dem Befestigungsabschnitt 50 anschließenden Wirkabschnitt 52 auf, an dem die Abrasivelemente 33 vorgesehen sind. Das gekrümmte Ende 46 des Befestigungsabschnitts ist um etwa 150° bis 160° über die gesamte gebogen, so dass ein im Querschnitt V-förmiges, gekrümmtes Ende 46 gebildet ist.

Wie aus Fig. 4 zu ersehen ist, sind die Bearbeitungselemente 32 jeweils mit ihrem gekrümmten Ende 46 in einer zugeordneten zylindrischen Ausnehmung 44 gehalten, die sich parallel zur Mantelfläche 42 erstreckt. Der Befestigungsabschnitt 50 erstreckt sich jeweils vom gekrümmten Ende 46 aus durch einen Schlitz 48 schräg nach außen über die Mantelfläche 42 hinaus. Somit stehen die Bearbeitungselemente 32 jeweils mit ihrem Befestigungsabschnitt 50 schräg nach außen hervor und sind in Rotationsrichtung (vgl. Pfeil 49 gemäß Fig. 4) abgewinkelt.

Ein erster Abschnitt 45 des Befestigungsabschnitts 50 erstreckt sich durch den Schlitz 48 jeweils mit einem Winkel von etwa 60° zur Radialrichtung. An den ersten Abschnitt 45 schließt sich ein zweiter Abschnitt 47 an, der in einem stumpfen Winkel von etwa 130° bis 140° abgewinkelt ist. Hieran schließt sich schließlich der Wirkabschnitt 52 an, der nochmals um einen Winkel von ca. 140° bis 150° abgewinkelt ist. Insgesamt sind die Bearbeitungselemente 32 auf diese Weise schräg in Rotationsrichtung (Pfeil 49) abgewinkelt, so dass ihre Wirkabschnitte 52 bei rotierendem Antrieb federnd an einer zu bearbeitenden Oberfläche anliegen.

Zur Montage können die Bearbeitungselemente 32 mit ihren gekrümmten Enden 46 seitlich in die zylindrischen Ausnehmungen 44 eingeschoben werden, wobei sie mit ihrem ersten Abschnitt 45 durch die Schlitze 48 geführt werden. Zur Sicherung gegen ein seitliches Verschieben werden Federringe an den Enden eingesetzt (nicht dargestellt).

Fig. 4 zeigt ferner schematisch ein Kugellager 40, an dem das Rotationselement 30 drehbar gelagert ist.

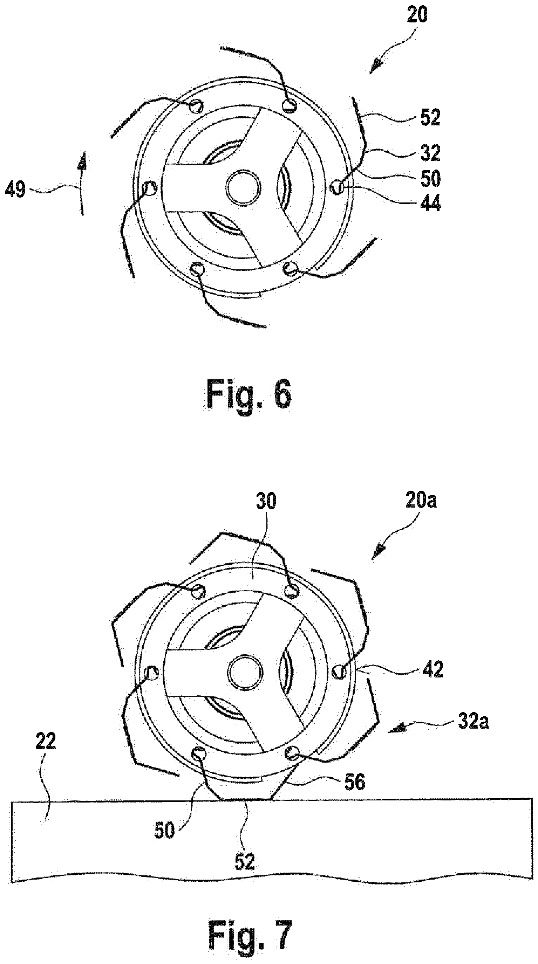

Fig. 6 zeigt das Bearbeitungswerkzeug 20 gemäß Fig. 4 in der Seitenansicht in etwas verkleinerter Darstellung.

Fig. 7 zeigt eine Abwandlung des Bearbeitungswerkzeugs gemäß Fig. 6, das insgesamt mit 20a bezeichnet ist. Hierbei sind die einzelnen Bearbeitungselemente 32a jeweils durch einen zusätzlichen Stützabschnitt 56 verlängert, der sich an das Ende des Wirkabschnitts 52 anschließt.

Fig. 7 zeigt das Bearbeitungswerkzeug 20a im Eingriff an einer zu bearbeiteten Oberfläche eines Käseproduktes 22. Durch die im Eingriff erfolgende Biegung in Richtung zum Mittelpunkt des Bearbeitungswerkzeugs 20a gelangen die betreffenden Stützabschnitte 56 zur Anlage an der Mantelfläche 42 des Rotationselements 30, wie in Fig. 7 gezeigt. Auf diese Weise können die Stützabschnitte 56 zu einer Stabilisierung beitragen. Dies erlaubt die Verwendung von höheren Drehzahlen, um somit eine schnellere Bearbeitung zu ermöglichen.

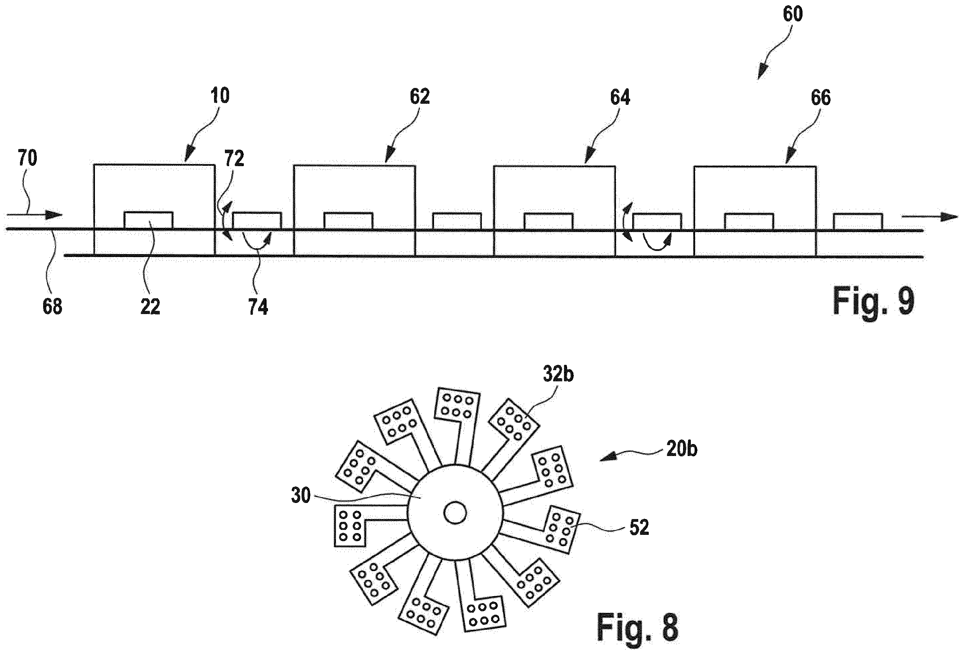

Fig. 8 zeigt eine weitere Abwandlung eines Bearbeitungswerkzeugs, das insgesamt mit 20b bezeichnet ist. Hierbei ist am Rotationselement 30 eine Mehrzahl von Bearbeitungselementen 32b etwa senkrecht zur Rotationsachse des Rotationselementes 30 aufgenommen. Die einzelnen vom Rotationselement 30 radial nach außen hervorstehenden Bearbeitungselemente 32b weisen jeweils etwa eine Hammerkontur auf und sind an ihren äußeren Wirkabschnitten 52 wiederum mit Abrasivelementen 33 versehen.

Es ergibt sich so eine Form, die einem Stirnfräser ähnelt.

In Fig. 9 ist eine Anlage zum Entplastifizieren und Entrinden von Käseblöcken vereinfacht dargestellt und insgesamt mit der Ziffer 60 bezeichnet. Hierbei sind vier aufeinanderfolgende Bearbeitungsstationen 10, 62, 64, 66 vorgesehen, die jeweils portalförmig gemäß Fig. 1 ausgebildet sind. Eine Transporteinrichtung 68, etwa in Form eines Förderbandes, ermöglicht einen Transport von Käseblöcken 22 durch sämtliche Bearbeitungsstationen 10, 62, 64, 66, wie durch einen Pfeil 70 angedeutet ist.

In der ersten Bearbeitungsstation 10 erfolgt zunächst eine Entplastifizierung an der Oberseite eines Käseblockes und gleichzeitig eine Entplastifizierung an den beiden Längsseiten. Nach Verlassen der ersten Bearbeitungsstation 10 werden die Käseblöcke 22 um 90° gedreht und um 180° gewendet, wie durch die Pfeile 72 und 74 angedeutet ist. Hierzu ist eine entsprechende Handling-Einrichtung (nicht dargestellt) vorgesehen.

In der nachfolgenden Bearbeitungsstation 62 erfolgt nunmehr eine Entplastifizierung an der Oberseite (ursprüngliche Unterseite) und an den Querseiten. Damit ist der Käseblock 22 an allen Seiten vollständig entplastifiziert.

In der nachfolgenden Station 64 werden die Käseblöcke 22 zunächst wieder an der Oberseite und an den Längsseiten entrindet. Nach Verlassen der Station 64 erfolgt wiederum eine Drehung um 90° und ein Wenden um 180° mittels einer entsprechenden Handling-Einrichtung.

In der nächsten Bearbeitungsstation 66 können die Käseblöcke 22 dann nunmehr an ihrer Oberseite (vorherige Unterseite) und an den Querseiten entrindet werden. Die nunmehr vollständig entplastifizierten und entrindeten Käseblöcke 22 können die Anlage 60 in Pfeilrichtung verlassen.

## Patentansprüche

1. Vorrichtung zum Bearbeiten einer Oberfläche von Lebensmittelprodukten (22), insbesondere zum Entplastifizieren oder Entrinden von Käseprodukten, mit einer Bearbeitungsstation (10, 62, 64, 66), an der mindestens ein rotierend antreibbares Bearbeitungswerkzeug (20, 20a,b) zur mechanischen Bearbeitung der Oberfläche vorgesehen ist, **dadurch gekennzeichnet, dass** jedes Bearbeitungswerkzeug (20, 20a,b) ein Rotationselement (30) aufweist, an dem eine Mehrzahl von zumindest teilweise flexibel und flächig ausgebildeten Bearbeitungselementen (32, 32a,b), aufgenommen ist, an denen jeweils mindestens ein Abrasivelement (33), vorzugsweise eine Mehrzahl von Abrasivelementen (33), zur mechanischen Bearbeitung der Oberfläche vorgesehen ist.

2. Vorrichtung nach Anspruch 1, **dadurch gekennzeichnet, dass** die Bearbeitungselemente (32, 32a,b) jeweils einen flexiblen Befestigungsabschnitt (50) aufweisen.

3. Vorrichtung nach einem der vorhergehenden Ansprüche, **dadurch gekennzeichnet, dass** das mindestens eine Abrasivelement (33) einstückig mit dem Bearbeitungselement (32, 32a,b) ausgebildet ist, vorzugsweise in Form einer Ausprägung ausgebildet ist.

4. Vorrichtung nach Anspruch 2 oder 3, **dadurch gekennzeichnet, dass** die Bearbeitungselemente (32, 32a, b) jeweils einen sich an den Befestigungsabschnitt (50) anschließenden Wirkabschnitt (52) aufweisen, der durch in Rotationsrichtung verlaufende Schlitze (54) in mehrere Abschnitte unterteilt ist.

5. Vorrichtung nach einem der vorhergehenden Ansprüche, **dadurch gekennzeichnet, dass** die Bearbeitungselemente (32, 32a,b) aus Metall, vorzugsweise aus Stahl, insbesondere aus Federstahl, bevorzugt in Blechform, bestehen.

6. Vorrichtung nach einem der vorhergehenden Ansprüche, **dadurch gekennzeichnet, dass** das Rotationselement (30) walzenförmig ausgebildet ist, und dass die Bearbeitungselemente (32, 32a,b) entlang einer Mantelfläche (42) des Rotationselements (30) festgelegt sind, wobei die Bearbeitungselemente (32, 32a,b) vorzugsweise über die Mantelfläche (42) des Rotationselementes (30) hinaus nach außen hervorstehen und in Rotationsrichtung abgewinkelt sind.

7. Vorrichtung nach Anspruch 6, **dadurch gekennzeichnet, dass** die Bearbeitungselemente (32, 32a,b) parallel zu einer Rotationsachse des Rotationselements (30) am Rotationselement (30) festgelegt sind und vorzugsweise mit ihren Befestigungsabschnitten (50) am Rotationselement (30) auswechselbar gehalten sind.

8. Vorrichtung nach einem der vorhergehenden Ansprüche, **dadurch gekennzeichnet, dass** die Bearbeitungselemente (32b) einen flexiblen Stützabschnitt (56) aufweisen, der zur Abstützung auf der Mantelfläche (42) des Rotationselements (30) im Betrieb ausgebildet ist.

9. Vorrichtung nach Anspruch 8, **dadurch gekennzeichnet, dass** die Bearbeitungselemente (32, 32a) jeweils ein gekrümmtes Ende (46) an ihrem Befestigungsabschnitt (50) aufweisen, mit dem sie in zugeordneten, vorzugsweise im Wesentlichen zylindrischen, Ausnehmungen (44) des Rotationselementes (30) gehalten sind und sich durch einen Schlitz (48) über eine Mantelfläche (42) des Rotationselementes (30) hinaus nach außen erstrecken, wobei die Bearbeitungselemente (32, 32a,b) vorzugsweise in die Ausnehmungen (44) seitlich einführbar und mittels Sicherungselementen fixierbar sind.

10. Vorrichtung nach einem der Ansprüche 1 bis 6, **dadurch gekennzeichnet, dass** sich die Bearbeitungselemente (32b) im Wesentlichen senkrecht zur Rotationsachse des Rotationselements (30) erstrecken.

11. Vorrichtung nach einem der vorhergehenden Ansprüche, **dadurch gekennzeichnet, dass** das Rotationselement (30) über einen Führungsarm (18) mit einem Drehantrieb (34) verbunden ist, und dass der Führungsarm (18) beweglich gelagert ist, vorzugsweise an einer Aufnahme (38) schwenkbar gelagert ist.

12. Vorrichtung nach einem der vorhergehenden Ansprüche, **dadurch gekennzeichnet, dass** eine Sensoreinheit (26) zur Abtastung einer zu bearbeitenden Oberfläche vorgesehen ist, die mit einer Steuereinheit (28) gekoppelt ist, um eine Position des Rotationselements (30) in Bezug auf eine zu bearbeitenden Oberfläche zu steuern und zu regeln.

13. Vorrichtung nach einem der vorhergehenden Ansprüche, **dadurch gekennzeichnet, dass** die Bearbeitungsstation (10, 62, 64, 66) von einem Gehäuse (12) umschlossen ist, in dem ein Bearbeitungsbereich (13) gebildet ist, der zur Zuführung von Lebensmittelprodukten (22) zur Bearbeitung ausgebildet ist, wobei innerhalb des Bearbeitungsbereichs (13) zumindest ein Führungsarm (18) mit einem Bearbeitungswerkzeug (20, 20a, b) gehalten ist, wobei eine Aufnahme (38) des Führungsarms (18) und ein Antrieb (34) für den Führungsarm (18) innerhalb des Gehäuses (12) aufgenommen und gegenüber dem Bearbeitungsbereich (13) abgedichtet sind.

14. Verfahren zum Bearbeiten einer Oberfläche von Lebensmittelprodukten (22), insbesondere zum Entplastifizieren und/oder Entrinden von Käseprodukten, mit den Schritten:
- Bereitstellen eines Lebensmittelproduktes (22), mit einer zu bearbeitenden Oberfläche;
- Bereitstellen eines Bearbeitungswerkzeugs (20, 20a,b) mit einem Rotationselement (30), an dem eine Mehrzahl von zumindest teilweise flexiblen, flächigen Bearbeitungselementen (32, 32a, b) aufgenommen ist, an denen jeweils mindestens ein Abrasivelement (33), vorzugsweise eine Mehrzahl von Abrasivelementen (33), zur mechanischen Bearbeitung der Oberfläche vorgesehen ist,
- Rotieren des Bearbeitungswerkzeugs (20, 20a,b) und Bearbeiten der Oberfläche mittels der Abrasivelemente (33).

15. Verfahren nach Anspruch 14, bei dem zunächst eine Entplastifizierung an einer Oberfläche und an den Längsseiten eines liegenden Lebensmittelproduktes (22) in Form eines Käseblocks durchgeführt wird, dann das Lebensmittelprodukt (22) um 90° gedreht und um 180° gewendet wird und eine Entplastifizierung an der ursprünglichen Unterseite und den Querseiten durchgeführt wird, wobei vorzugsweise nach der Entplastifizierung eine Entrindung an einer Oberfläche und an den Längsseiten eines liegenden Lebensmittelproduktes (22) in Form eines Käseblocks durchgeführt wird, dann der Käseblock (22) um 90° gedreht und um 180° gewendet wird und eine Entrindung an der ursprünglichen Unterseite und den Querseiten durchgeführt wird, wobei alternativ, wenn das Lebensmittelprodukt (22) in Form eines Käselaibes vorliegt, das Lebensmittelprodukt (22) zunächst an seiner Oberfläche entplastifiziert und bei Drehung um seine Längsachse am Rand entplastifiziert wird, schließlich das Lebensmittelprodukt (22) um 180° gewendet und an seiner ursprünglichen Unterseite entplastifiziert wird, wobei das Lebensmittelprodukt (22) vorzugsweise anschließend an seiner Oberfläche entrindet wird, dann das Lebensmittelprodukt (22) vorzugsweise um seine Längsachse gedreht und am Rand entrindet wird, schließlich das Lebensmittelprodukt (22) vorzugsweise um 180° gewendet und an seiner ursprünglichen Unterseite entrindet wird.
